# EUROPEAN PATENT APPLICATION

(11) **EP 4 708 455 A1**
(43) Date of publication of application: **11.03.2026**
(21) Application number: 24883605.8
(22) Date of filing: 27.11.2024
(51) Int. Cl.: H01M 10/613, H01M 10/6556, H01M 10/6567

(54) **BATTERY PACK, ELECTRICAL DEVICE AND ENERGY STORAGE DEVICE**

(30) Priority: 09.07.2024 CN 202421609819 U
(71) Applicant: Contemporary Amperex Technology Co., Ltd., Ningde, Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); WANG, Lei, Ningde, Fujian 352100 (CN); ZHENG, Zhimin, Ningde, Fujian 352100 (CN); CHENG, Yong, Ningde, Fujian 352100 (CN)
(74) Representative: Lorenz Seidler Gossel Part. mbB
(86) International application number: PCT/CN2024/135022
(87) International publication number: WO 2026/011660

(57) **Abstract**

Embodiments of the present disclosure provide a battery pack, an electrical apparatus, and an energy storage apparatus, which belong to the field of battery technologies. The battery pack includes a box, a battery cell, a thermal management component, a flange, a first connecting pipe, and a second connecting pipe. The box has an accommodating cavity and a mounting hole in communication with the accommodating cavity. The battery cell is located in the accommodating cavity. The thermal management component is located in the accommodating cavity to cool the battery cell. The mounting hole is used to avoid a temperature-regulating fluid entering and exiting the thermal management component. The flange covers the mounting hole. The flange is mounted on the box. The first connecting pipe is respectively connected to the flange and the thermal management component to provide the temperature-regulating fluid. The second connecting pipe is respectively connected to the flange and the thermal management component to discharge the temperature-regulating fluid. The flange spans the first connecting pipe and the second connecting pipe.

## Description

### CROSS-REFERENCE TO RELATED APPLICATIONS

The present disclosure is filed based on and claims priority to Chinese Patent Application No. 202421609819.3, entitled "BATTERY PACK, ELECTRICAL APPARATUS, AND ENERGY STORAGE APPARATUS" and filed on July 9, 2024, which is incorporated herein by reference in its entirety.

### TECHNICAL FIELD

The present disclosure relates to the field of battery technologies, and in particular, to a battery pack, an electrical apparatus, and an energy storage apparatus.

### BACKGROUND

New-energy batteries are increasingly widely applied in life and industries. For example, new-energy vehicles equipped with the batteries have been widely used. In addition, the batteries are further increasingly applied in the field of energy storage.

Battery cells of a battery pack are mounted in a box, and energy is stored by charging the battery cells in the box or power is supplied to the outside by discharging the battery cells in the box. In the related art, mounting between a flange in the battery pack and the box is relatively complicated.

### SUMMARY OF THE INVENTION

In view of this, embodiments of the present disclosure intend to provide a battery pack, aiming to simplify mounting between a flange and a box.

In order to achieve the above objective, technical solutions in the embodiments of the present disclosure are implemented as follows:
An embodiment of the present disclosure provides a battery pack, including:
a box having an accommodating cavity and a mounting hole in communication with the accommodating cavity;
a battery cell located in the accommodating cavity;
a thermal management component located in the accommodating cavity to cool the battery cell, where the mounting hole is used to avoid a temperature-regulating fluid entering and exiting the thermal management component;
a flange covering the mounting hole, where the flange is mounted to the box;
a first connecting pipe respectively connected to the flange and the thermal management component to provide the temperature-regulating fluid; and
a second connecting pipe respectively connected to the flange and the thermal management component to discharge the temperature-regulating fluid, where
the flange spans the first connecting pipe and the second connecting pipe.

In the embodiment of the present disclosure, the first connecting pipe and the second connecting pipe are both connected to the same flange, and the flange spans the first connecting pipe and the second connecting pipe. The first connecting pipe and the second connecting pipe do not need to be connected to respective corresponding flanges. The flange spanning the first connecting pipe and the second connecting pipe is mounted on the box as a whole, and there is no need to mount a plurality of flanges on the box, thereby simplifying the mounting of the flange and making the mounting between the flange and the box more convenient.

In one embodiment, the battery pack includes a sealing ring, the sealing ring is in sealing contact with the flange and the box respectively, a space enclosed by the sealing ring spans the first connecting pipe and the second connecting pipe, and the mounting hole is located in the sealing ring.

In the embodiment of the present disclosure, the sealing ring is in sealing contact with the flange and the box respectively, the space enclosed by the sealing ring spans the first connecting pipe and the second connecting pipe, the first connecting pipe and the second connecting pipe are capable of being sealed by the same sealing ring, and there is no need to seal the first connecting pipe and the second connecting pipe separately, which reduces possible leakage positions on the box and is conducive to improving the sealing reliability between the flange and the box.

In one embodiment, in an arrangement direction of the first connecting pipe and the second connecting pipe, the first connecting pipe and the second connecting pipe are both located on the same side of the box.

In the embodiment of the present disclosure, the first connecting pipe and the second connecting pipe are both located on the same side of the box, so that the first connecting pipe and the second connecting pipe are capable of being as close as possible, which is conducive to reducing the area of the flange, and further conducive to reducing the volume of the space enclosed by the sealing ring. A smaller sealing ring is conducive to improving the sealing reliability between the flange and the box.

In one embodiment, a center distance between the first connecting pipe and the second connecting pipe on the same side is 40 mm to 60 mm.

In the embodiment of the present disclosure, the center distance between the first connecting pipe and the second connecting pipe is limited to a relatively reasonable range. On the one hand, sufficient operating space is provided for the first connecting pipe and the second connecting pipe to be respectively connected to the flange and the thermal management component. On the other hand, the center distance between the first connecting pipe and the second connecting pipe is capable of limiting the dimensions of the flange and the sealing ring, which is conducive to improving the sealing reliability between the flange and the box.

In one embodiment, the mounting hole spans the first connecting pipe and the second connecting pipe.

In the embodiment of the present disclosure, the mounting hole spans the first connecting pipe and the second connecting pipe, so that there may be one mounting hole, and therefore, the first connecting pipe and the second connecting pipe are capable of being as close as possible, which is conducive to reducing the dimension of the mounting hole, and then conducive to reducing the dimensions of the flange and the sealing ring, thereby improving the sealing reliability between the flange and the box.

In one embodiment, the first connecting pipe and the second connecting pipe pass through corresponding mounting holes, respectively.

In the present embodiment, the first connecting pipe and the second connecting pipe pass through the corresponding mounting holes, respectively, so that the number of the mounting holes is at least two, and there is a certain spacing distance between the at least two mounting holes, thereby providing relatively sufficient operating space for the first connecting pipe and the second connecting pipe to be respectively connected to the flange and the thermal management component.

In one embodiment, a span of the space enclosed by the sealing ring in the arrangement direction of the first connecting pipe and the second connecting pipe is 60 mm to 80 mm.

In the embodiment of the present disclosure, the span of the space enclosed by the sealing ring in the arrangement direction of the first connecting pipe and the second connecting pipe is limited to a relatively reasonable range. On the one hand, sufficient operating space is provided for the first connecting pipe and the second pipe to be respectively connected to the flange and the thermal management component. On the other hand, the span of the space enclosed by the sealing ring in the arrangement direction of the first connecting pipe and the second connecting pipe is capable of limiting the dimensions of the flange and the sealing ring, which is conducive to improving the sealing reliability between the flange and the box.

In one embodiment, an annular groove is formed on one side of the flange facing the mounting hole, a space enclosed by the annular groove spans the first connecting pipe and the second connecting pipe, and the sealing ring is located in the annular groove.

In the embodiment of the present disclosure, the sealing ring is located in the annular groove. On the one hand, a contact area between the sealing ring and the flange is increased, which is conducive to improving a connection strength between the sealing ring and the flange, and is also conducive to improving the sealing reliability between the flange and the box. On the other hand, in a process of the sealing ring being in sealing contact with the box and the flange respectively, arranging the annular groove on the side of the flange close to the box facilitates positioning of the sealing ring, so that the sealing ring is easy to be adhered to the flange, thereby facilitating the mounting of the sealing ring.

In one embodiment, the first connecting pipe, the second connecting pipe, and the flange are integrally formed.

In the embodiment of the present disclosure, the first connecting pipe, the second connecting pipe, and the flange are integrally formed. On the one hand, it is conducive to reducing processing steps for connecting the first connecting pipe, the second connecting pipe, and the flange, and further conducive to reducing the production cycle of the battery pack. On the other hand, the integrally formed first connecting pipe, second connecting pipe, and flange have good integrity, which is conducive to reducing connection defects at connection positions of the first connecting pipe, the second connecting pipe, and the flange, and further conducive to reducing the possibility of leakage of the temperature-regulating fluid at the connection positions of the first connecting pipe, the second connecting pipe, and the flange, thereby improving the sealing reliability between the flange and the box.

In one embodiment, the first connecting pipe and the second connecting pipe both span opposite sides of the flange in a thickness direction of the flange.

In the embodiment of the present disclosure, the first connecting pipe and the second connecting pipe both span the opposite sides of the flange in the thickness direction of the flange, so that one ends of the first connecting pipe and the second connecting pipe close to the box in the thickness direction of the flange are capable of passing through the box through the mounting hole, and the ends of the first connecting pipe and the second connecting pipe close to the box in the thickness direction of the flange are at least partially located in the box, which facilitates connections of the first connecting pipe and the second connecting pipe to the thermal management component, and is conducive to improving the mounting efficiency of the battery pack.

In one embodiment, the flange is located outside the box.

In the embodiment of the present disclosure, the flange is located outside the box. In the process of mounting the flange on the box, the outside of the box has a large operating space, which is conducive to improving the convenience of connecting the flange to the box, and further conducive to improving the efficiency of the connection between the flange and the box, thereby reducing the production cycle of the battery pack.

In one embodiment, the thermal management component includes:
a temperature-regulating body; and
a hose including a first tube body and a second tube body, wherein the first tube body is respectively connected to the temperature-regulating body and the first connecting pipe to provide the temperature-regulating fluid to the temperature-regulating body, and the second tube body is respectively connected to the temperature-regulating body and the second connecting pipe to discharge the temperature-regulating fluid in the temperature-regulating body.

In the embodiment of the present disclosure, the first tube body and the second tube body are both channels with a relatively soft texture. On the one hand, the first tube body and the second tube body with a relatively soft texture facilitate flexible arrangement of the temperature-regulating body in the box, so as to make full use of the space in the box, which is conducive to arranging internal structures of the battery pack more compactly. On the other hand, the temperature-regulating body may expand after being heated, thereby causing the position shift of the temperature-regulating body, and the first tube body and the second tube body with a relatively soft texture are conducive to reducing the impact of the movement of the temperature-regulating body, and further conducive to reducing the impact of the movement of the temperature-regulating body on the first connecting pipe and the second connecting pipe, so as to reduce the possibility of loosening at connection positions of the first tube body to the first connecting pipe and the temperature-regulating body respectively, and the possibility of loosening at connection positions of the second tube body to the second connecting pipe and the temperature-regulating body respectively, thereby being conducive to improving the sealing reliability between the flange and the box.

In a second aspect of the embodiments of the present disclosure, an electrical apparatus is provided, including:
the battery pack of any of the preceding embodiments; and
an electricity-consuming subject, where the battery pack is arranged on the electricity-consuming subject, and the battery pack supplies power to the electricity-consuming subject.

In a third aspect of the embodiments of the present disclosure, an energy storage apparatus is provided, including:
the battery pack of any of the preceding embodiments, where the battery pack is capable of storing power; and
a mounting box, where the battery pack is arranged in the mounting box.

In the battery pack provided in the embodiments of the present disclosure, the first connecting pipe and the second connecting pipe are both connected to the same flange, and the flange spans the first connecting pipe and the second connecting pipe. The first connecting pipe and the second connecting pipe do not need to be connected to respective corresponding flanges. The flange spanning the first connecting pipe and the second connecting pipe is mounted on the box as a whole, and there is no need to mount a plurality of flanges on the box, thereby simplifying the mounting of the flange and making the mounting between the flange and the box more convenient.

### BRIEF DESCRIPTION OF DRAWINGS

FIG. 1 is an assembly view of a battery pack according to an embodiment of the present disclosure, in which a box and a battery cell are not shown;
FIG. 2 is a schematic enlarged view of a structure at a place B in FIG. 1;
FIG. 3 is a schematic top view of FIG. 2;
FIG. 4 is a schematic view of assembling a first connecting pipe, a second connecting pipe, and a flange in one embodiment of the present disclosure;
FIG. 5 is a schematic view of a sectional structure at a place A-A in FIG. 4;
FIG. 6 is a schematic view of assembling a first connecting pipe, a second connecting pipe, and a flange in one embodiment of the present disclosure, in which the second connecting pipe is not shown;
FIG. 7 is a schematic view of a structure of a temperature-regulating body according to an embodiment of the present disclosure;
FIG. 8 is a schematic view of a deployment of a temperature-regulating channel according to an embodiment of the present disclosure;
FIG. 9 is an assembly view of a battery pack according to an embodiment of the present disclosure, in which a battery cell and a sealing ring are not shown;
FIG. 10 is a schematic enlarged view of a structure at a place C in FIG. 9; and
FIG. 11 is a schematic view of a structure of a box according to an embodiment of the present disclosure.

Description of reference numerals
1. Thermal management component; 11. Temperature-regulating body; 111. Temperature-regulating plate; 111a. Temperature-regulating channel; 112. Third connecting pipe; 113. Fourth connecting pipe; 12. Hose; 121. First tube body; 122. Second tube body; 123. Connector; 2. Flange; 2a. Annular groove; 3. First connecting pipe; 3a. First groove; 4. Second connecting pipe; 5. Sealing ring; 6. Box; 6a. Accommodating cavity; 6b. Mounting hole.

### DETAILED DESCRIPTION

Examples of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art in the present disclosure. The terms used herein are intended only for the purpose of describing specific embodiments and are not intended to limit the present disclosure. The terms "including" and "having" and any variants thereof in the embodiments of the present disclosure are intended to cover non-exclusive inclusion.

In the description of the embodiments of the present disclosure, the technical terms "first", "second", "third", and the like are only used for distinguishing different objects, and cannot be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

In the description of the embodiments of the present disclosure, unless otherwise explicitly specified and defined, the technical terms such as "mount", "connect", "connection", and "fix" should be understood in a broad sense. For example, the connection may be a fixed connection, a detachable connection, or an integrated connection, may be a mechanical connection or an electrical connection, or may be a direct connection, an indirect connection through an intermediate, an internal communication between two elements, or an interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be a direct contact, or a contact through an intermediate layer, or a contact between two objects that have a little or no interaction force, or a contact between two objects that have an interaction force.

In the related art, a battery cell is mounted in a box, and a thermal management component in the box regulates the temperature of the battery cell, and a corresponding temperature-regulating fluid needs to enter and exit the box. A connecting pipe for entering and exiting of the temperature-regulating fluid usually corresponds to a flange and a mounting hole, and the flange is mounted on the box at the corresponding mounting hole, so that the thermal management component can be mounted on the corresponding connecting pipe connected to the flange. A first connecting pipe for providing the temperature-regulating fluid and a second connecting pipe for discharging the temperature-regulating fluid are provided so that the box has at least two mounting holes connected to the accommodating cavity. The number of mounting holes is large, and therefore, the number of flanges is also large. The flange corresponding to each mounting hole is respectively mounted on the box. Each flange is mounted separately, so that the mounting of the flange is complicated and the mounting of the flange is inconvenient.

In a battery pack according to the embodiments of the present disclosure, a first connecting pipe and a second connecting pipe are both connected to the same flange. The flange spans the first connecting pipe and the second connecting pipe to reduce the number of flanges. The flange spanning the first connecting pipe and the second connecting pipe is mounted on the box as a whole, which simplifies the mounting of the flange, so that the mounting of the flange is convenient.

The solution of the embodiments of the present disclosure may be applied to, but is not limited to, a battery pack, an electrical apparatus including a battery pack, or an energy storage apparatus including a battery pack.

The embodiments of the present disclosure provide an energy storage apparatus, including the battery pack according to any of the embodiments and a mounting box. The battery pack is arranged in the mounting box, and the battery pack is capable of storing power.

The energy storage apparatus may be applied to, but is not limited to, an energy storage container, an energy storage cabinet, and the like.

The embodiments of the present disclosure provide an electrical apparatus, including an electricity-consuming subject and the battery pack according to any of the embodiments. The battery pack is arranged on the electricity-consuming subject, and the battery pack supplies power to the electricity-consuming subject.

The electrical apparatus may be, but is not limited to, a mobile phone, a tablet, a laptop, an electric toy, an electric tool, a battery vehicle, an electric vehicle, a ship, a spacecraft, and the like. The electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

For the convenience of description, the following embodiments are illustrated with an example in which the electrical apparatus according to an embodiment of the present disclosure is a vehicle. The vehicle may be a fuel vehicle, a gas vehicle, or a new-energy vehicle, and the new-energy vehicle may be an all-electric vehicle, a hybrid electric vehicle, an extended range electric vehicle, or the like. The interior of the vehicle is arranged with a battery pack, and the battery pack may be arranged at the bottom or head or tail of the vehicle. The battery pack may be used to power the vehicle. For example, the battery pack may be used as an operating power source of the vehicle. For an electricity-consuming subject of the vehicle, the electricity-consuming subject includes a controller and a motor. The controller is used to control the battery to power the motor, for example, for meeting operating power requirements when the vehicle is starting, navigating, and driving.

In an embodiment of the present disclosure, the battery pack may not only be used as the operating power source of the vehicle, but also be used as a driving power source of the vehicle to replace or partially replace fuel or natural gas to provide driving power for the vehicle.

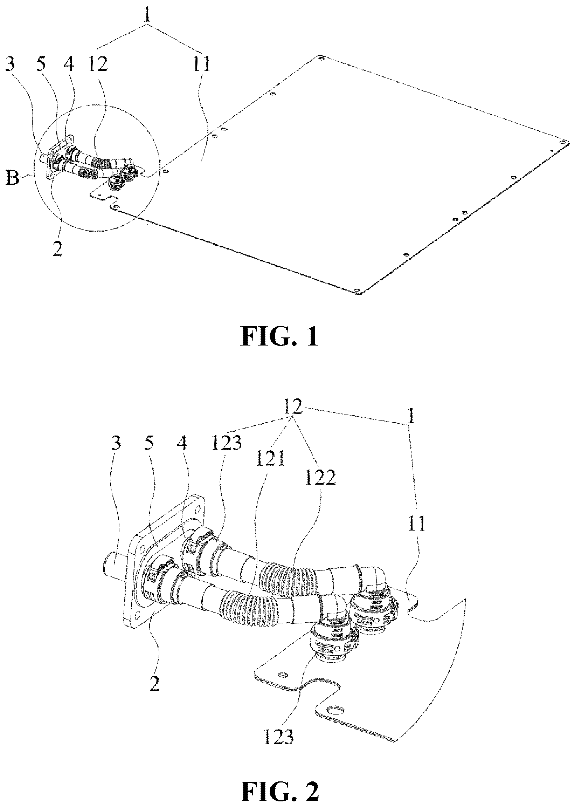

For the battery pack according to the embodiment of the present disclosure, reference may be made to FIG. 1 to FIG. 4 and FIG. 9 to FIG. 11. The battery pack includes a box 6, a battery cell, a thermal management component 1, a flange 2, a first connecting pipe 3, and a second connecting pipe 4. The box 6 has an accommodating cavity 6a and a mounting hole 6b in communication with the accommodating cavity 6a. The battery cell is located in the accommodating cavity 6a. The thermal management component 1 is located in the accommodating cavity 6a to cool the battery cell. The mounting hole 6b is used to avoid a temperature-regulating fluid entering and exiting the thermal management component 1. The flange 2 covers the mounting hole 6b. The flange 2 is mounted on the box 6. The first connecting pipe 3 is respectively connected to the flange 2 and the thermal management component 1 to provide the temperature-regulating fluid. The second connecting pipe 4 is respectively connected to the flange 2 and the thermal management component 1 to discharge the temperature-regulating fluid. The flange 2 spans the first connecting pipe 3 and the second connecting pipe 4.

The box 6 refers to a structure with an accommodating space. The battery cell is located in the box 6, and the box 6 accommodates the battery cell of the battery pack.

There may be a plurality of battery cells, and the plurality of battery cells may be connected in series or in parallel or in series-parallel, where the parallel-series connection refers to that the plurality of battery cells are connected both in series and in parallel. The plurality of battery cells may be directly connected in series or in parallel or in series-parallel, and then an entirety composed of the plurality of battery cells may be placed in the box 6. Of course, the plurality of battery cells may be first connected in series or in parallel or in series-parallel to form battery modules, and the plurality of battery modules are then connected in series or in parallel or in series-parallel to form an entirety. The entirety formed by connecting the plurality of battery modules in series or in parallel or in series-parallel is placed in the box 6. The battery pack may further include another structure. For example, the battery pack may further include a bus component for electrically connecting the plurality of battery cells to each other.

The battery cell may be a secondary battery. The secondary battery refers to a structure that can be used continually by activating an active material in a charging manner after discharging.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead accumulator, and the like, which is not limited in the embodiments of the present disclosure.

The battery cell includes a shell and an electrode assembly. The motor assembly includes positive and negative electrode plates and a separator, and the shell may be a sealed structure or a non-sealed structure. As an example, the shell is a non-sealed structure, and the shell plays a role in protecting the electrode assembly. The battery cell further includes a sealing bag, and the sealing bag is located between the shell and the electrode assembly and is used to encapsulate the electrode assembly. Specifically, the sealing bag may be a bag-shaped insulating member or an aluminum-plastic film.

For example, the thermal management component 1 is located between the box 6 and the battery cell, the thermal management component 1 is in contact with the battery cell, and the temperature-regulating fluid flows into the thermal management component 1 through the first connecting pipe 3 and flows out from the second connecting pipe 4 to cool the battery cell.

For example, the thermal management component 1 may be a water cooling device or an oil cooling device, and the temperature-regulating fluid may be water or oil.

For example, the material of the flange 2 may not be limited, and may be metal, for example.

For example, the materials of the first connecting pipe 3 and the second connecting pipe 4 may not be limited, and may be metal, for example.

For example, the material of the box 6 may not be limited, and may be aluminum or steel, for example.

In the embodiment of the present disclosure, the first connecting pipe 3 and the second connecting pipe 4 are both connected to the same flange 2, and the flange 2 spans the first connecting pipe 3 and the second connecting pipe 4. The first connecting pipe 3 and the second connecting pipe 4 do not need to be connected to respective corresponding flanges 2. The flange 2 spanning the first connecting pipe 3 and the second connecting pipe 4 is mounted on the box 6 as a whole, and there is no need to mount a plurality of flanges 2 on the box 6, thereby simplifying the mounting of the flange 2 and making the mounting between the flange 2 and the box 6 more convenient.

In one embodiment, referring to FIG. 1 to FIG. 4 and FIG. 9 to FIG. 11, the battery pack includes a sealing ring 5, the sealing ring 5 is in sealing contact with the flange 2 and the box 6 respectively, a space enclosed by the sealing ring 5 spans the first connecting pipe 3 and the second connecting pipe 4, and the mounting hole 6b is located in the sealing ring 5.

For example, the material of the sealing ring 5 may not be limited, and may be rubber, for example.

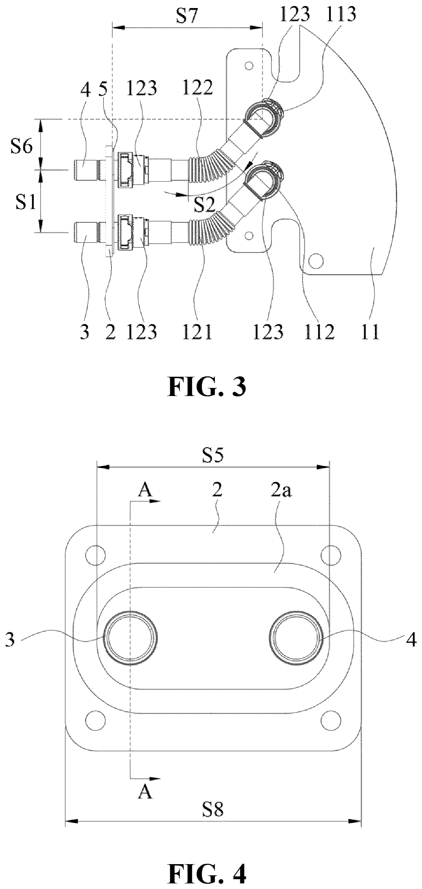

It should be noted that, referring to FIG. 4, the space enclosed by the sealing ring 5 spans the first connecting pipe 3 and the second connecting pipe 4, which means that the first connecting pipe 3 and the second connecting pipe 4 are sleeved in the same sealing ring 5, and the number of sealing rings 5 may not be limited.

For example, referring to FIG. 1 to FIG. 4, there is one sealing ring 5, the first connecting pipe 3 and the second connecting pipe 4 are sleeved in the one sealing ring 5, and the first connecting pipe 3 and the second connecting pipe 4 are sealed by the one sealing ring 5.

For example, there are a plurality of sealing rings 5, and each sealing ring 5 has the first connecting pipe 3 and the second connecting pipe 4 sleeved therein. Each sealing ring 5 is capable of sealing the first connecting pipe 3 and the second connecting pipe 4 together. For each sealing ring 5, the same sealing ring 5 sleeves on the first connecting pipe 3 and the second connecting pipe 4.

For example, there are two sealing rings 5, the two sealing rings 5 are arranged in an arrangement direction of the flange 2 and the box 6, and the first connecting pipe 3 and the second connecting pipe 4 are sleeved in the two sealing rings 5.

In the embodiment of the present disclosure, the sealing ring 5 is in sealing contact with the flange 2 and the box 6 respectively, the space enclosed by the sealing ring 5 spans the first connecting pipe 3 and the second connecting pipe 4, the first connecting pipe 3 and the second connecting pipe 4 are capable of being sealed by the same sealing ring 5, and there is no need to seal the first connecting pipe 3 and the second connecting pipe 4 separately, which reduces possible leakage positions on the box 6 and is conducive to improving the sealing reliability between the flange 2 and the box 6.

In one embodiment, referring to FIG. 1 to FIG. 4 and FIG. 9 to FIG. 10, in an arrangement direction of the first connecting pipe 3 and the second connecting pipe 4, the first connecting pipe 3 and the second connecting pipe 4 are both located on the same side of the box 6.

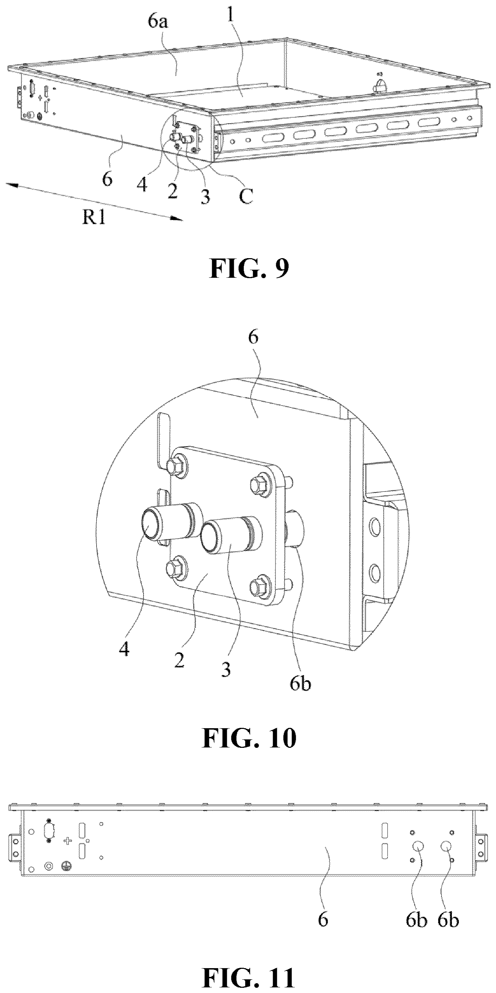

For example, a direction indicated by R1 in FIG. 9 is the arrangement direction of the first connecting pipe 3 and the second connecting pipe 4.

In the embodiment of the present disclosure, the first connecting pipe 3 and the second connecting pipe 4 are both located on the same side of the box 6, so that the first connecting pipe 3 and the second connecting pipe 4 are capable of being as close as possible, which is conducive to reducing the area of the flange 2, and further conducive to reducing the volume of the space enclosed by the sealing ring 5. A smaller sealing ring 5 is conducive to improving the sealing reliability between the flange 2 and the box 6.

It is understandable that the positional relationship between the first connecting pipe 3 and the second connecting pipe 4 is not limited. For example, in the arrangement direction of the first connecting pipe 3 and the second connecting pipe 4, the first connecting pipe 3 and the second connecting pipe 4 are respectively located on different sides of the same side wall of the box 6.

In one embodiment, referring to FIG. 3, a center distance between the first connecting pipe 3 and the second connecting pipe 4 on the same side is 40 mm to 60 mm,
where mm is a unit of length, indicating millimeters. The center distance between the first connecting pipe 3 and the second connecting pipe 4 may be measured by using a vernier caliper.

For example, the dimension indicated by S1 in FIG. 3 is the center distance between the first connecting pipe 3 and the second connecting pipe 4, and 40 mm≤S1≤60 mm.

For example, the center distance between the first connecting pipe 3 and the second connecting pipe 4 may be 40 mm, 50 mm, 55 mm, or 60 mm.

In the embodiment of the present disclosure, the center distance between the first connecting pipe 3 and the second connecting pipe 4 is limited to a relatively reasonable range. On the one hand, sufficient operating space is provided for the first connecting pipe 3 and the second connecting pipe 4 to be respectively connected to the flange 2 and the thermal management component 1. On the other hand, the center distance between the first connecting pipe 3 and the second connecting pipe 4 is capable of limiting the dimensions of the flange 2 and the sealing ring 5 in the arrangement direction of the first connecting pipe 3 and the second connecting pipe 4, which is conducive to improving the sealing reliability between the flange 2 and the box 6.

It is understandable that the center distance between the first connecting pipe 3 and the second connecting pipe 4 may not be limited. For example, the center distance between the first connecting pipe 3 and the second connecting pipe 4 may be less than 40 mm or greater than 60 mm.

In one embodiment, referring to FIG. 1 to FIG. 4, the mounting hole 6b spans the first connecting pipe 3 and the second connecting pipe 4.

It should be noted that the mounting hole 6b spans the first connecting pipe 3 and the second connecting pipe 4, which means that the first connecting pipe 3 and the second connecting pipe 4 are sleeved in the same mounting hole 6b.

For example, referring to FIG. 3 and FIG. 4, there is one flange 2, one sealing ring 5, and one mounting hole 6b, the first connecting pipe 3 and the second connecting pipe 4 are connected to the same flange 2, the first connecting pipe 3 and the second connecting pipe 4 pass through the same mounting hole 6b, and the one sealing ring 5 surrounds the outside of the first connecting pipe 3 and the second connecting pipe 4 and is in sealing contact with the flange 2 and the box 6, respectively.

In the embodiment of the present disclosure, the mounting hole 6b spans the first connecting pipe 3 and the second connecting pipe 4, so that there may be one mounting hole 6b, and therefore, the first connecting pipe 3 and the second connecting pipe 4 are capable of being as close as possible, which is conducive to reducing the dimension of the mounting hole 6b, and then conducive to reducing the dimensions of the flange 2 and the sealing ring 5, thereby improving the sealing reliability between the flange 2 and the box 6.

In one embodiment, referring to FIG. 9 to FIG. 11, the first connecting pipe 3 and the second connecting pipe 4 pass through corresponding mounting holes 6b, respectively.

For example, referring to FIG. 9 to FIG. 11, there are two mounting holes 6b, the first connecting pipe 3 passes through one of the mounting holes 6b, and the second connecting pipe 4 passes through the other mounting hole 6b.

For example, referring to FIG. 9 to FIG. 11, the mounting hole 6b is circular, and the diameter of the mounting hole 6b may be 20 mm.

In the present embodiment, the first connecting pipe 3 and the second connecting pipe 4 pass through the corresponding mounting holes 6b, respectively, so that the number of the mounting holes 6b is at least two, and there is a certain spacing distance between the at least two mounting holes 6b, thereby providing relatively sufficient operating space for the first connecting pipe 3 and the second connecting pipe 4 to be respectively connected to the flange 2 and the thermal management component 1.

In one embodiment, referring to FIG. 4, a span of the space enclosed by the sealing ring 5 in the arrangement direction of the first connecting pipe 3 and the second connecting pipe 4 is 60 mm to 80 mm.

For example, in FIG. 4, the span of the space enclosed by the sealing ring 5 in the arrangement direction of the first connecting pipe 3 and the second connecting pipe 4 is S5, and 60 mm≤S5≤80 mm.

For example, the span of the space enclosed by the sealing ring 5 in the arrangement direction of the first connecting pipe 3 and the second connecting pipe 4 may be 60 mm, 70 mm, 77 mm, or 80 mm.

For example, in FIG. 4, a dimension of the flange 2 in the arrangement direction of the first connecting pipe 3 and the second connecting pipe 4 is S8, and 90 mm≤S8≤110 mm.

For example, the dimension of the flange 2 in the arrangement direction of the first connecting pipe 3 and the second connecting pipe 4 may be 90 mm, 98 mm, 100 mm, 105 mm, or 110 mm.

In the embodiment of the present disclosure, the span of the space enclosed by the sealing ring 5 in the arrangement direction of the first connecting pipe 3 and the second connecting pipe 4 is limited to a relatively reasonable range. On the one hand, sufficient operating space is provided for the first connecting pipe 3 and the second pipe to be respectively connected to the flange 2 and the thermal management component 1. On the other hand, the span of the space enclosed by the sealing ring 5 in the arrangement direction of the first connecting pipe 3 and the second connecting pipe 4 is capable of limiting the dimensions of the flange 2 and the sealing ring 5, which is conducive to improving the sealing reliability between the flange 2 and the box 6.

It is understandable, the span of the space enclosed by the sealing ring 5 in the arrangement direction of the first connecting pipe 3 and the second connecting pipe 4 may not be limited. For example, the span of the space enclosed by the sealing ring 5 in the arrangement direction of the first connecting pipe 3 and the second connecting pipe 4 may be less than 60 mm, or greater than 80 mm.

In one embodiment, referring to FIG. 4 to FIG. 6, the first connecting pipe 3, the second connecting pipe 4, and the flange 2 are integrally formed.

In the embodiment of the present disclosure, the first connecting pipe 3, the second connecting pipe 4, and the flange 2 are integrally formed. On the one hand, it is conducive to reducing processing steps for connecting the first connecting pipe 3, the second connecting pipe 4, and the flange 2, and further conducive to reducing the production cycle of the battery pack. On the other hand, the integrally formed first connecting pipe 3, second connecting pipe 4, and flange 2 have good integrity, which is conducive to reducing connection defects at connection positions of the first connecting pipe 3, the second connecting pipe 4, and the flange 2, and further conducive to reducing the possibility of leakage of the temperature-regulating fluid at the connection positions of the first connecting pipe 3, the second connecting pipe 4, and the flange 2, thereby improving the sealing reliability between the flange 2 and the box 6.

It is understandable that the forming method of the first connecting pipe 3, the second connecting pipe 4, and the flange 2 may not be limited. For example, the first connecting pipe 3, the second connecting pipe 4, and the flange 2 may be formed by welding.

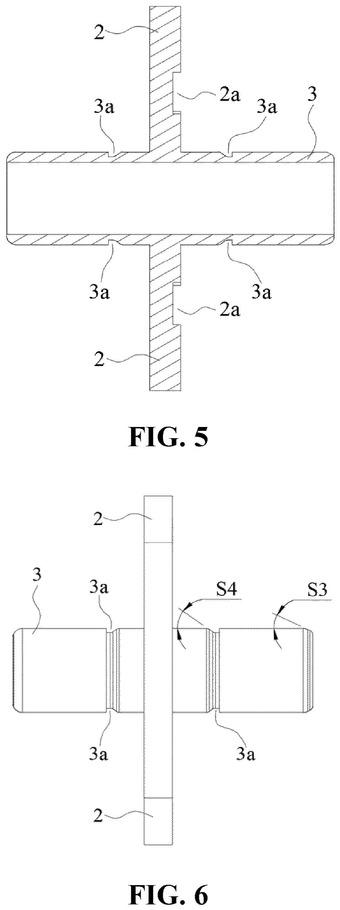

In one embodiment, referring to FIG. 4 and FIG. 5, an annular groove 2a is formed on one side of the flange 2 facing the mounting hole 6b, a space enclosed by the annular groove 2a spans the first connecting pipe 3 and the second connecting pipe 4, and the sealing ring 5 is located in the annular groove 2a.

In the embodiment of the present disclosure, the sealing ring 5 is located in the annular groove 2a. On the one hand, a contact area between the sealing ring 5 and the flange 2 is increased, which is conducive to improving a connection strength between the sealing ring 5 and the flange 2, and is also conducive to improving the sealing reliability between the flange 2 and the box 6. On the other hand, in a process of the sealing ring 5 being in sealing contact with the box 6 and the flange 2 respectively, arranging the annular groove 2a on the side of the flange 2 close to the box 6 facilitates positioning of the sealing ring 5, so that the sealing ring 5 is easy to be adhered to the flange 2, thereby facilitating the mounting of the sealing ring 5.

It is understandable that the surface of the flange 2 facing the mounting hole 6b may not be provided with the annular groove 2a, the surface of the flange 2 facing the mounting hole 6b is a plane, and the sealing ring 5 is directly connected to the surface of the flange 2 facing the mounting hole 6b.

In one embodiment, referring to FIG. 1 to FIG. 3, FIG. 5, and FIG. 6, the first connecting pipe 3 and the second connecting pipe 4 both span opposite sides of the flange 2 in a thickness direction of the flange 2.

In the embodiment of the present disclosure, the first connecting pipe 3 and the second connecting pipe 4 both span the opposite sides of the flange 2 in the thickness direction of the flange 2, so that one ends of the first connecting pipe 3 and the second connecting pipe 4 close to the box 6 in the thickness direction of the flange 2 are capable of passing through the box 6 through the mounting hole 6b, and the ends of the first connecting pipe 3 and the second connecting pipe 4 close to the box 6 in the thickness direction of the flange 2 are at least partially located in the box 6, which facilitates connections of the first connecting pipe 3 and the second connecting pipe 4 to the thermal management component 1, and is conducive to improving the mounting efficiency of the battery pack.

It is understandable that the positional relationship between the first connecting pipe 3 and the second connecting pipe 4 may not be limited. For example, the first connecting pipe 3 and the second connecting pipe 4 are both located on a side of the flange 2 away from the box 6 in the thickness direction of the flange 2.

In one embodiment, referring to FIG. 1 to FIG. 3, the flange 2 is located outside the box 6.

For example, referring to FIG. 1 to FIG. 3, the flange 2 is connected to the outside of the box 6, and the flange 2 does not span remaining outer surfaces of the box 6.

In the embodiment of the present disclosure, the flange 2 is located outside the box 6. In the process of mounting the flange 2 on the box 6, the outside of the box 6 has a large operating space, which is conducive to improving the convenience of connecting the flange 2 to the box 6, and further conducive to improving the efficiency of the connection between the flange 2 and the box 6, thereby reducing the production cycle of the battery pack.

It is understandable that the positional relationship between the flange 2 and the box 6 may not be limited. For example, the flange 2 may be located inside the box 6.

In one embodiment, referring to FIG. 1 to FIG. 3, FIG. 7, and FIG. 8, the thermal management component 1 includes a temperature-regulating body 11 and a hose 12. The hose 12 includes a first tube body 121 and a second tube body 122, where the first tube body 121 is respectively connected to the temperature-regulating body 11 and the first connecting pipe 3 to provide the temperature-regulating fluid to the temperature-regulating body 11, and the second tube body 122 is respectively connected to the temperature-regulating body 11 and the second connecting pipe 4 to discharge the temperature-regulating fluid in the temperature-regulating body 11.

For example, the material of the hose 12 may not be limited, and may be rubber, for example.

For example, referring to FIG. 1 to FIG. 3, FIG. 7, and FIG. 8, the temperature-regulating body 11 includes a temperature-regulating plate 111, a third connecting pipe 112, and a fourth connecting pipe 113. The third connecting pipe 112 is respectively connected to the first tube body 121 and the temperature-regulating plate 111 to provide the temperature-regulating fluid to the temperature-regulating plate 111. The fourth connecting pipe 113 is respectively connected to the second tube body 122 and the temperature-regulating plate 111 to discharge the temperature-regulating fluid in the temperature-regulating plate 111.

For example, referring to FIG. 1 to FIG. 3, FIG. 7, and FIG. 8, the hose 12 further includes a connector 123, and there are four connectors 123. The four connectors 123 are respectively arranged on opposite sides of the first tube body 121 and the second tube body 122 in an axial direction. The first tube body 121 is connected to the first connecting pipe 3 and the third connecting pipe 112 respectively through the connectors 123 at both ends of the first tube body 121 in the axial direction to provide the temperature-regulating fluid to the temperature-regulating plate 111. The second tube body 122 is connected to the second connecting pipe 4 and the fourth connecting pipe 113 respectively through the connectors 123 at both ends of the second tube body 122 in the axial direction to discharge the temperature-regulating fluid in the temperature-regulating plate 111.

For example, a distance shown by S7 in FIG. 3 is a distance between the center of the fourth connecting pipe 113 and the surface of the flange 2 on one side close to the box 6, and the distance shown by S7 may be 132.9 mm.

For example, referring to FIG. 1 to FIG. 3, FIG. 5, and FIG. 6, the first connecting pipe 3 passes through the flange 2. In the axial direction of the first connecting pipe 3, the first connecting pipe 3 has first grooves 3a on both of opposite sides close to the flange 2. The first groove 3a is snap-fitted with the connector 123 so that the connector 123 is connected firmly to the first connecting pipe 3.

For example, referring to FIG. 6, in the axial direction of the first connecting pipe 3, a sidewall of the first groove 3a close to the flange 2 is an inclined surface.

For example, an angle shown in S4 in FIG. 6 is an inclination angle of the sidewall of the first groove 3a on the side close to the flange 2 in the axial direction of the first connecting pipe 3. The angle shown in S4 may range from 32° to 38°, where "°" represents degrees. The angle may be measured by using an angle measuring instrument.

For example, the second connecting pipe 4 has second grooves on both opposite sides close to the flange 2 in the axial direction, and the second grooves have technical features similar to those of the first grooves 3a. The third connecting pipe 112 has a third groove on one side close to the temperature-regulating plate 111 in the axial direction, the fourth connecting pipe 113 has a fourth groove on one side close to the temperature-regulating plate 111 in the axial direction, and both the third groove and the fourth groove have technical features similar to those of the first grooves 3a.

For example, referring to FIG. 5 and FIG. 6, end faces of both ends of the first connecting pipe 3 in the axial direction are inclined surfaces, which facilitate the connection between the connector 123 and the first connecting pipe 3.

For example, an angle shown by S3 in FIG. 6 is an inclination angle of the end faces of both ends of the first connecting pipe 3 in the axial direction, and the angle shown by S3 may be 25°.

For example, the end faces of both ends of the second connecting pipe 4 in the axial direction are also inclined surfaces, and inclination angles of the inclined surfaces may also be 25°. End faces of the third connecting pipe 112 and the fourth connecting pipe 113 away from the temperature-regulating plate 111 in the axial direction are both inclined surfaces, and inclination angles of the inclined surfaces may also be 25°.

For example, referring to FIG. 1 to FIG. 3, FIG. 7, and FIG. 8, in a direction intersecting the arrangement direction of the first connecting pipe 3 and the third connecting pipe 112, a relative position relationship between the first connecting pipe 3 and the third connecting pipe 112 may not be limited, and a relative position relationship between the second connecting pipe 4 and the fourth connecting pipe 113 may not be limited.

For example, referring to FIG. 1 to FIG. 3, FIG. 7, and FIG. 8, in a direction intersecting the arrangement direction of the first connecting pipe 3 and the third connecting pipe 112, the first connecting pipe 3 and the third connecting pipe 112 are staggered so that the first tube body 121 is in an arc shape, and the second connecting pipe 4 and the fourth connecting pipe 113 are staggered so that the second tube body 122 is in an arc shape.

For example, an angle shown by S2 in FIG. 3 is an angle corresponding to the arc-shaped second tube body 122, and the angle shown by S2 may be 46.2°.

For example, a distance shown by S6 in FIG. 3 is a center distance between the first connecting pipe 3 and the third connecting pipe 112, and the distance shown by S6 may be 44.7 mm.

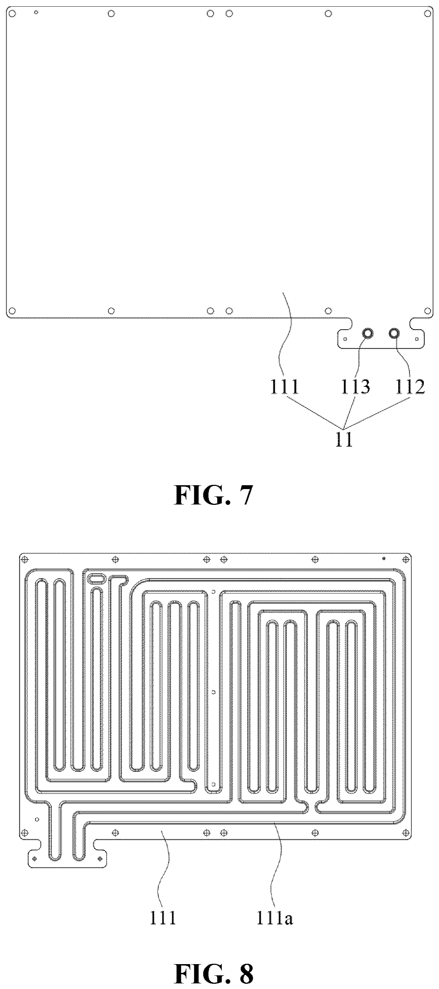

For example, referring to FIG. 8, a temperature-regulating channel 111a is arranged in the temperature-regulating plate 111, and the third connecting pipe 112 is in communication with the fourth connecting pipe 113 through the temperature-regulating channel 111a. The temperature-regulating fluid flows into the first tube body 121 through the first connecting pipe 3, flows into the temperature-regulating channel 111a through the third connecting pipe 112, is discharged to the second tube body 122 through the fourth connecting pipe 113, and is then discharged out of the box 6 through the second connecting pipe 4. The temperature-regulating channel 111a is spread over the temperature-regulating plate 111 as much as possible, so that the temperature-regulating channel 111a is extended as much as possible, which is conducive to improving the heat dissipation efficiency of the battery cell under normal use.

For example, in the arrangement direction of the temperature-regulating plate 111 and the battery cell, a surface of the temperature-regulating plate 111 close to the battery cell has an insulating layer to reduce the possibility of short circuit of the battery pack.

In the embodiment of the present disclosure, the first tube body 121 and the second tube body 122 are both channels with a relatively soft texture. On the one hand, the first tube body 121 and the second tube body 122 with a relatively soft texture facilitate flexible arrangement of the temperature-regulating body 11 in the box 6, so as to make full use of the space in the box 6, which is conducive to arranging internal structures of the battery pack more compactly. On the other hand, the temperature-regulating body 11 may expand after being heated, thereby causing the position shift of the temperature-regulating body 11, and the first tube body 121 and the second tube body 122 with a relatively soft texture are conducive to reducing the impact of the movement of the temperature-regulating body 11, and further conducive to reducing the impact of the movement of the temperature-regulating body 11 on the first connecting pipe 3 and the second connecting pipe 4, so as to reduce the possibility of loosening at connection positions of the first tube body 121 to the first connecting pipe 3 and the temperature-regulating body 11 respectively, and the possibility of loosening at connection positions of the second tube body 122 to the second connecting pipe 4 and the temperature-regulating body 11 respectively, thereby being conducive to improving the sealing reliability between the flange 2 and the box 6.

In the battery pack according to the embodiments of the present disclosure, referring to FIG. 1 to FIG. 8, the first connecting pipe 3 and the second connecting pipe 4 share one flange 2 to reduce the numbers of flanges 2 and sealing rings 5, thereby reducing the possible leakage positions on the box 6, which is conducive to improving the sealing reliability between the flange 2 and the box 6. The first connecting pipe 3 and the second connecting pipe 4 are both located on the same side of the box 6, the center distance between the first connecting pipe 3 and the second connecting pipe 4 may be 40 mm to 60 mm, the span of the space enclosed by the sealing ring 5 in the arrangement direction of the first connecting pipe 3 and the second connecting pipe 4 may be 60 mm to 80 mm, and the flange 2 is located outside the box 6, thereby providing sufficient operating space for the first connecting pipe 3 and the second connecting pipe 4 to be respectively connected to the flange 2 and the thermal management component 1. The mounting hole 6b may span the first connecting pipe 3 and the second connecting pipe 4, and the first connecting pipe 3 and the second connecting pipe 4 may also pass through the corresponding mounting holes 6b, respectively. The first connecting pipe 3, the second connecting pipe 4, and the flange 2 are integrally formed to reduce the possibility of leakage of the temperature-regulating fluid at the connection position between the first connecting pipe 3 and the flange 2 and at the connection position between the second connecting pipe 4 and the flange 2. The annular groove 2a is formed on one side of the flange 2 facing the mounting hole 6b to facilitate the mounting of the sealing ring 5. The first connecting pipe 3 and the second connecting pipe 4 both span opposite sides of the flange 2 in the thickness direction of the flange 2, so as to facilitate the connections of the first connecting pipe 3 and the second connecting pipe 4 to the thermal management component 1. The thermal management component 1 includes the temperature-regulating body 11 and the hose 12. The hose 12 with a soft texture is conducive to reducing the influence of thermal expansion and contraction of the temperature-regulating body 11, and is also convenient for arranging the third connecting pipe 112 and the fourth connecting pipe 113 in the box 6. The temperature-regulating body 11 may include the temperature-regulating plate 111, the third connecting pipe 112, and the fourth connecting pipe 113, and the hose 12 further includes the connector 123. The two ends of the first tube body 121 are respectively connected to the first connecting pipe 3 and the third connecting pipe 112 through the connectors 123, and the two ends of the second tube body 122 are respectively connected to the second connecting pipe 4 and the fourth connecting pipe 113 through the connectors 123.

The above are only preferred embodiments of the present disclosure alternative embodiments, and are not intended to limit the present disclosure. For those skilled in the art, the present disclosure may have various modifications and variations. Any modifications, equivalent replacements, improvements, and the like made within the spirit and principle of the present disclosure shall be included within the scope of protection of the present disclosure.

## Claims

1. A battery pack, comprising:
a box having an accommodating cavity and a mounting hole in communication with the accommodating cavity ;
a battery cell located in the accommodating cavity;
a thermal management component located in the accommodating cavity to cool the battery cell, wherein the mounting hole is used to avoid a temperature-regulating fluid entering and exiting the thermal management component;
a flange covering the mounting hole, wherein the flange is mounted to the box;
a first connecting pipe respectively connected to the flange and the thermal management component to provide the temperature-regulating fluid; and
a second connecting pipe respectively connected to the flange and the thermal management component to discharge the temperature-regulating fluid, wherein
the flange spans the first connecting pipe and the second connecting pipe.

2. The battery pack according to claim 1, wherein the battery pack comprises a sealing ring, the sealing ring is in sealing contact with the flange and the box respectively, a space enclosed by the sealing ring spans the first connecting pipe and the second connecting pipe, and the mounting hole is located in the sealing ring.

3. The battery pack according to claim 2, wherein in an arrangement direction of the first connecting pipe and the second connecting pipe, the first connecting pipe and the second connecting pipe are both located on the same side of the box.

4. The battery pack according to claim 3, wherein a center distance between the first connecting pipe and the second connecting pipe on the same side is 40 mm to 60 mm.

5. The battery pack according to any one of claims 2 to 4, wherein the mounting hole spans the first connecting pipe and the second connecting pipe, or the first connecting pipe and the second connecting pipe pass through the respective corresponding mounting holes.

6. The battery pack according to any one of claims 2 to 5, wherein a span of the space enclosed by the sealing ring in the arrangement direction of the first connecting pipe and the second connecting pipe is 60 mm to 80 mm.

7. The battery pack according to any one of claims 2 to 6, wherein an annular groove is formed on one side of the flange facing the mounting hole, a space enclosed by the annular groove spans the first connecting pipe and the second connecting pipe, and the sealing ring is located in the annular groove.

8. The battery pack according to any one of claims 1 to 7, wherein the first connecting pipe, the second connecting pipe, and the flange are integrally formed.

9. The battery pack according to any one of claims 1 to 8, wherein the first connecting pipe and the second connecting pipe both span opposite sides of the flange in a thickness direction of the flange.

10. The battery pack according to any one of claims 1 to 9, wherein the flange is located outside the box.

11. The battery pack according to any one of claims 1 to 10, wherein the thermal management component comprises:
a temperature-regulating body; and
a hose comprising a first tube body and a second tube body, wherein the first tube body is respectively connected to the temperature-regulating body and the first connecting pipe to provide the temperature-regulating fluid to the temperature-regulating body, and the second tube body is respectively connected to the temperature-regulating body and the second connecting pipe to discharge the temperature-regulating fluid in the temperature-regulating body.

12. An electrical apparatus, comprising:
the battery pack according to any one of claims 1 to 11; and
an electricity-consuming subject, wherein the battery pack is arranged on the electricity-consuming subject, and the battery pack supplies power to the electricity-consuming subject.

13. An energy storage apparatus, comprising:
the battery pack according to any one of claims 1 to 11, wherein the battery pack is capable of storing power; and
a mounting box, wherein the battery pack is arranged in the mounting box.
